**Europäisches Patentamt**

(19) **European Patent Office**

**Office européen des brevets**

(11) Numéro de publication: **0 319 393 B1**

(12) ## FASCICULE DE BREVET EUROPEEN

(45) Date de publication du fascicule du brevet:
**27.12.90**

(21) Numéro de dépôt: **88402996.8**

(22) Date de dépôt: **29.11.88**

(51) Int. Cl.⁵: **F16H 57/12,** F16H 57/08,
F16H 1/28, B60N 2/02

(54) Mécanisme réducteur sans jeu utilisable notamment pour le réglage de diverses parties d'un siège de véhicule automobile.

(30) Priorité: **03.12.87 FR 8716777**

(43) Date de publication de la demande:
**07.06.89 Bulletin 89/23**

(45) Mention de la délivrance du brevet:
**27.12.90 Bulletin 90/52**

(84) Etats contractants désignés:
**AT BE CH DE ES GB GR IT LI LU NL SE**

(56) Documents cités:
**EP-A- 0 099 549**
**AU-B- 522 141**
**BE-A- 626 378**
**FR-A- 2 450 713**
**US-A- 1 417 797**
**US-A- 4 345 792**

(73) Titulaire: **A. & M. COUSIN Etablissements COUSIN FRERES, Le Bois de Flers, F-61103 Flers Cédex Orne(FR)**

(72) Inventeur: **Chales, Bernard, La Haute Guermondière, Aubusson F-61100 Flers(FR)**
Inventeur: **Pipon, Yves, La Garenne St Georges des Groseillers, F-61100 Flers(FR)**

(74) Mandataire: **Madeuf, Claude Alexandre Jean et al, CABINET MADEUF 3, avenue Bugeaud, F-75116 Paris(FR)**

## Description

La présente invention concerne un mécanisme réducteur sans jeu utilisable notamment pour le réglage de diverses parties d'un siège de véhicule automobile.

La plupart des mécanismes de réglage continu pour sièges de véhicules automobiles utilisent des dispositifs réducteurs à trains planétaires comportant en général un satellite unique. Ceci présente malheureusement l'inconvénient de générer sur le système de commande des efforts radiaux non équilibrés qui sont nuisibles au fonctionnement sous charges et responsables de prises de jeu importantes.

Un tel type de mécanisme réducteur est connu, en effet, le FR-A 2 450 713 montre un mécanisme réducteur à flasques allongés qui comporte un flasque fixe 12 pouvant être rendu solidaire de l'armature de l'assise du siège considéré et présentant intérieurement une couronne dentée 19 avec laquelle engrène une denture de satellite double 35, 36, 37, 38, puis un flasque mobile 11 pouvant être rendu solidaire de l'armature du dossier du siège et présentant une couronne dentée intérieure 23 destinée à coopérer avec la denture des satellites doubles étant maintenus par leur partie cylindrique médiane dans le mécanisme réducteur par une pièce centrale 31a, 31b porte-satellites et un pignon 32 entraîné par un arbre de commande étant supplémentairement prevu pour l'entraînement des satellites doubles.

Le mécanisme concerné par l'invention est un mécanisme réducteur comportant deux trains planétaires imbriqués dont les efforts internes sont équilibrés du fait de l'action de plusieurs satellites. De plus, l'idée directrice de l'invention est d'éliminer de manière élastique les jeux indésirables du mécanisme en conservant des tolérances de fabrication réalistes.

Le mécanisme de base comprend deux flasques, l'un appelé fixe, l'autre mobile et qui sont munis tous deux d'une denture intérieure délimitant deux couronnes. Ces deux couronnes peuvent éventuellement présenter un nombre différent ou le même nombre de dents et a l'intérieur de ces deux flasques sont disposés au moins quatre satellites.

Chaque satellite présente deux dentures comportant en général un nombre de dents différent et disposées de part et d'autre d'une portée cylindrique : ce sont des satellites doubles.

Ces satellites engrènent d'une part avec les deux couronnes et d'autre part de chaque côté des portées cylindriques, avec un pignon central. L'un de ces deux pignons est destiné à être l'organe de commande du mécanisme, l'autre pignon étant laissé libre en rotation.

Enfin, une pièce porte-satellites est destinée à recevoir les portées cylindriques des satellites.

De par les tolérances de fabrication et de montage, un tel mécanisme présente bien évidemment du jeu de battement entre les deux flasques.

L'invention a pour but d'éliminer de manière élastique ce jeu de battement.

Le flasque mobile étant centré dans le flasque fixe par une liaison à pivot, il faut donc éliminer le jeu en rotation entre ces deux flasques.

Selon l'invention, on prévoit en outre que les dentures des satellites présentent des cotes de fabrication décalées une sur deux de la cote nominale de sorte qu'en plaquant les satellites vers les couronnes, on soit sûr que deux satellites diamétralement opposés aient une de leurs dentures plaquées sans jeu dans le flasque fixe et que les deux autres satellites aient l'autre denture plaquée sans jeu dans le flasque mobile.

Le plaquage des satellites dans les couronnes peut être effectué soit par la pièce porte-satellites qui présente alors elle-même, de par sa matière ou de par sa conception, une élasticité suffisante, soit par un ressort réagissant sur les portées cylindriques des satellites.

On comprend donc que, d'une part, un satellite engrène toujours sans jeu dans une couronne et avec du jeu dans l'autre couronne et que, d'autre part, deux satellites diamétralement opposés sont plaqués dans un flasque et les deux autres dans l'autre flasque. Cette disposition permet d'équilibrer les efforts. On constate que le principe ci-dessus reste valable avec six, voire huit satellites.

L'élimination du jeu de rotation du flasque mobile est effectuée en éliminant les jeux des satellites suivant les trois degrés de liberté que possède un solide dans un plan.

Le jeu suivant le premier degré de liberté (jeu radial) est éliminé par la fonction de plaquage décrite plus haut. C'est l'une des fonctions de la pièce porte-satellites ou la fonction du ressort.

Le jeu suivant le second degré de liberté (jeu angulaire de la position des axes des satellites), est éliminé en évitant de façon élastique à l'axe du satellite de basculer autour du point d'engrènement entre ce satellite et la couronne avec laquelle il coopère. Cette fonction est assurée par la pièce porte-satellites qui, de par le choix de sa matière ou de par sa conception, présente une élasticité lui permettant d'empêcher ce battement des satellites en maintenant une pression autour de leurs portées cylindriques.

Le jeu suivant le troisième degré de liberté (jeu axial) est enfin supprimé en éliminant le jeu de rotation des satellites autour de leur propre axe grâce a un pignon fou élastique engrenant sans jeu avec les satellites.

Conformément à l'invention, le mécanisme réducteur sans jeu, utilisable notamment pour le réglage de diverses parties d'un siège d'un véhicule automobile, comportant un flasque fixe pouvant être rendu solidaire de l'armature de l'assise du siège considéré et présentant intérieurement une couronne dentée avec laquelle engrène une première denture de satellite double, puis un flasque mobile pouvant être rendu solidaire de l'armature du dossier du siège et présentant une couronne dentée intérieure destinée à coopérer avec une seconde denture des satellites doubles, puis ces derniers sont maintenus par leur partie cylindrique médiane dans le mécanisme réducteur par une pièce centrale porte-satellites, finalement un pignon central est entraîné par un arbre de commande pour assurer l'entraînement des satellites doubles, est caractérisé en ce que d'abord le flasque mobile est maintenu libre en rotation dans le flasque fixe par un organe circulaire et que la pièce centrale présente des moyens élastiques destinés à plaquer au moins deux satellites dans la denture du flasque fixe et au moins deux autres satellites dans celle du flasque mobile, ces satellites étant centrés sur le côté de la couronne dentée d'un des flasques à l'aide d'un pignon fou flottant élastique destiné à lier sans jeu angulaire les satellites dans leur rotation autour de leur partie cylindrique médiane propre respective, le montage permettant un déplacement radial des satellites doubles par placage vers les couronnes dentées des flasques tout en maintenant les parties cylindriques médianes des satellites doubles dans leur position angulaire respectives.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une coupe diamétrale du mécanisme réducteur à trains planétaires sans jeu conforme à l'invention.

La fig. 2 est une coupe suivant la ligne II-II de la fig. 1.

La fig. 3 est une coupe suivant la ligne III-III de la fig. 1.

La fig. 4 est une coupe transversale d'une forme particulière du mécanisme réducteur de l'invention.

La fig. 5 est une coupe suivant la ligne V-V de la fig. 4.

La fig. 6 est une coupe suivant la ligne VI-VI de la fig. 4.

Les fig. 7 et 7a sont des coupes suivant la ligne VII-VII de la fig. 4 de deux variantes.

Les fig. 8 et 9 sont des vues d'une première forme de réalisation de la pièce centrale porte-satellites de l'invention, respectivement en plan et en coupe suivant la ligne A-A de la vue en plan.

Les fig. 10 et 11 sont des vues d'une seconde forme de réalisation de la pièce centrale porte-satellites de l'invention, respectivement en plan et en coupe suivant la ligne B-B de la vue en plan.

Les fig. 12 et 13 sont des vues d'une troisième forme de réalisation de la pièce centrale porte-satellites de l'invention, respectivement en plan et en coupe suivant la ligne C-C de la vue en plan.

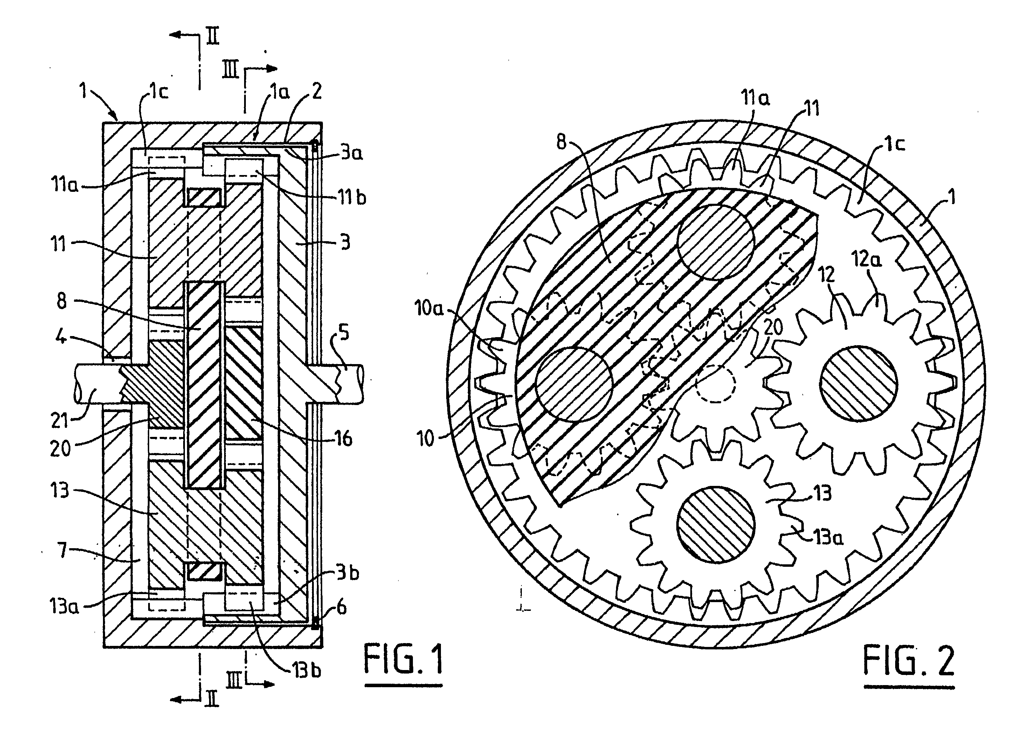

A la fig. 1, on a représenté schématiquement, en coupe diamétrale, une forme de réalisation du mécanisme réducteur sans jeu conforme à l'invention qui comprend une couronne extérieure ou flasque fixe 1 qui est reliée à l'armature de l'assise d'un siège lorsque ce mécanisme réducteur est utilisé pour le réglage en inclinaison du dossier de ce siège.

Comme cela est visible à la fig. 1, la partie interne 1a du flasque fixe 1 comporte extérieurement un dégagement 2 qui permet la mise en place de la périphérie extérieure 3a d'une couronne réceptrice ou flasque mobile 3. Il est à noter que le flasque fixe 1 présente en son centre un trou 4 dont le rôle sera expliqué plus loin tandis que le flasque mobile 3 présente en son centre un arbre 5.

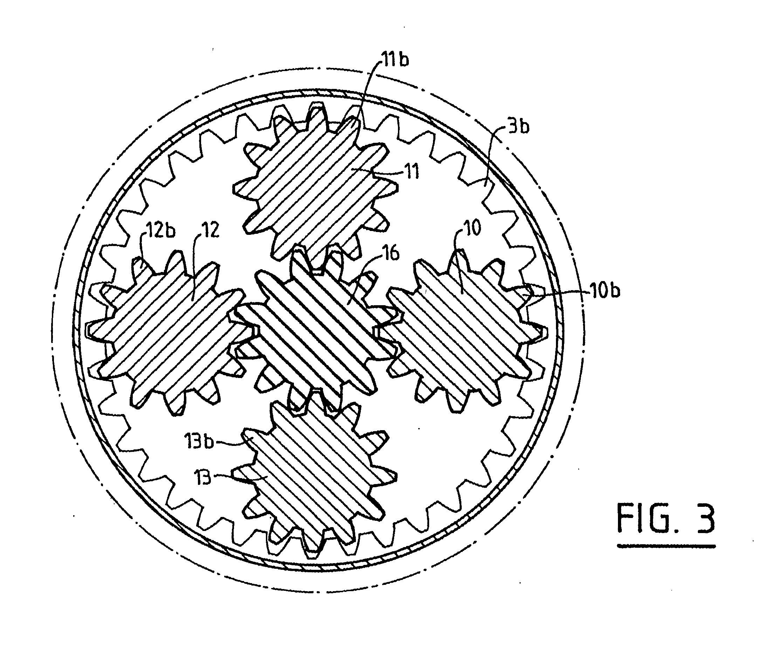

Comme on le voit à la fig. 3, le flasque mobile 3 délimite intérieurement une couronne dentée 3b, et il en est de même pour la périphérie interne 1c du flasque fixe 1 comme cela est visible à la fig. 2.

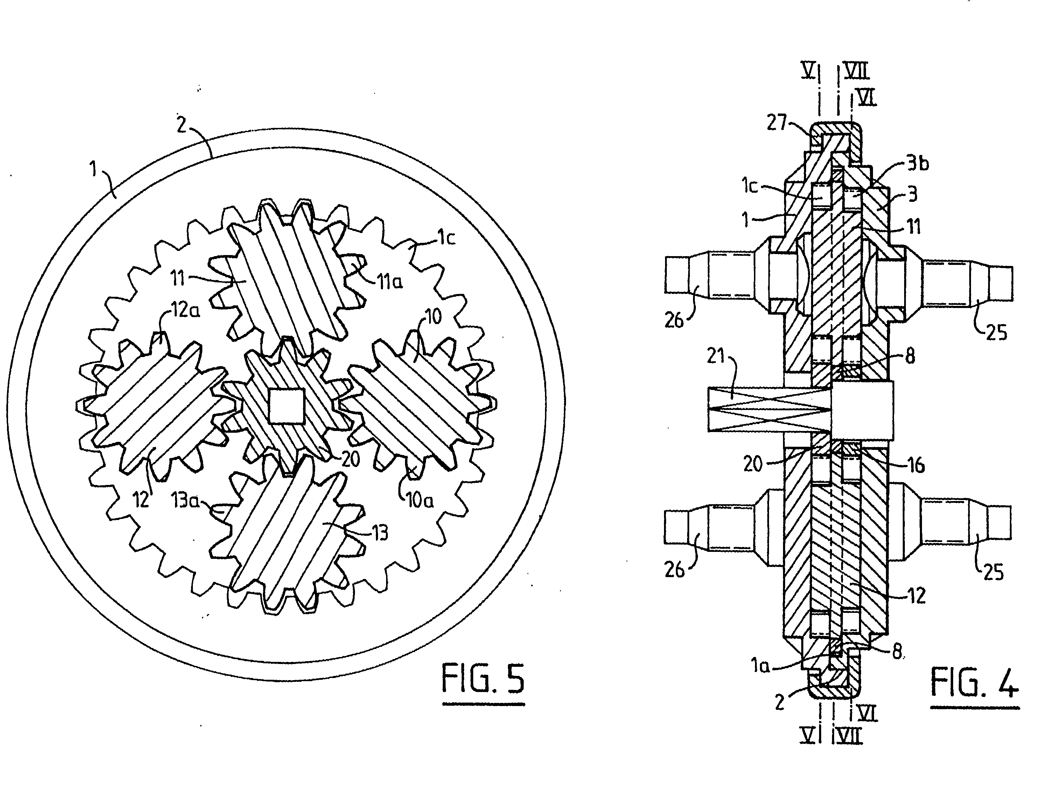

Le flasque mobile 3 est maintenu à l'intérieur du flasque fixe 1 par un circlip 6 (voir fig. 1) mais, dans certains cas, la réalisation peut être différente comme cela sera décrit en référence à la fig. 4.

De même, il est possible, dans certains cas, d'interposer entre le flasque fixe 1 et le flasque mobile 3, soit un ou plusieurs roulements à billes, soit un roulement à aiguilles afin de limiter les frottements entre les deux flasques.

La cavité intérieure 7 délimitée par les deux flasques placés l'un dans l'autre contient en son centre une pièce centrale 8 porte-satellites qui, dans la présente réalisation, est réalisée en une matière présentant une certaine élasticité de façon à maintenir correctement dans leurs positions respectives quatre satellites doubles 10, 11, 12, 13 qui présentent, chacun de chaque côté d'une partie cylindrique, d'une part, une denture 10a, 11a, 12a, 13a et, d'autre part, une denture 10b, 11b, 12b, 13b.

Selon une caractéristique de l'invention, les cotes de fabrication des dentures des satellites 10, 11, 12, 13 sont décalées une sur deux de la cote nominale et les dentures 10a, 11a, 12a, 13a engrènent avec la denture de la couronne dentée 1c du flasque fixe 1 tandis que les dentures 10b, 11b, 12b et 13b engrènent avec la denture de la couronne dentée 3b du flasque mobile 3.

De plus, et comme on le voit bien à la fig. 3, un pignon fou 16 flottant engrène avec les dentures 10b, 11b, 12b, 13b. Le pignon fou 16 est réalisé en une matière ayant un certain coefficient d'élasticité et engrène sans jeu avec les quatre satellites 10, 11, 12, 13, ce qui supprime le jeu en rotation des satellites autour de leur propre axe.

Comme on peut le voir notamment à la fig. 2, les dentures 10a, 11a, 12a et 13a des satellites doubles correspondants 10, 11, 12 et 13 engrènent avec un pignon de commande 20 monté à l'extrémité d'un arbre 21 destiné à relier le mécanisme réducteur soit à un organe de manoeuvre manuel soit à un organe de manoeuvre à moteur. L'arbre 21 passe à travers le trou 4 du flasque fixe 1.

Comme on l'a vu dans la description qui précède, par le biais des cotes de fabrication des dentures des satellites, le montage est réalisé de façon que la pièce 8 porte-satellites plaque systématiquement deux satellites diamétralement opposés dans une couronne dentée et les deux autres dans l'autre couronne dentée.

On obtient ainsi, d'une part, du fait que la pièce centrale 8 porte-satellites est en matière élastique, une bonne prise des dentures des satellites 10, 11, 12, 13 dans les couronnes dentées 1b et 3b des flasques fixe et mobile 1 et 3 et, d'autre part, le maintien de ces satellites 10, 11, 12, 13 de façon à éliminer le phénomène de basculement de chaque satellite autour de son point d'engrènement avec la couronne dentée considérée.

L'élimination des jeux en rotation des satellites 10, 11, 12, 13 autour de leur propre axe reposant dans la pièce centrale 8 porte-satellites, est obtenue par la présence du pignon fou 16 présentant certaines propriétés élastiques et engrénant sans jeu avec les dentures 10b, 11b, 12b et 13b.

La fig. 4 représente en coupe transversale une réalisation du mécanisme réducteur conforme à l'invention. On remarque qu'un canal est prévu au centre de la pièce 8 porte-satellites pour le passage de l'arbre d'entraînement 21 de la fig. 1. Par ailleurs, dans l'application préférée du mécanisme réducteur au réglage des diverses parties d'un siège de véhicules automobiles, des goujons 25 sont reliés à l'armature du dossier, et des goujons 26 à l'armature du siège considéré. De même, à la place du circlip 6 de la fig. 1, il est prévu à la fig. 4, une bague circulaire 27 maintenant l'un sur l'autre les flasques 1 et 3 et permettant la rotation du flasque 3 par rapport au flasque 1.

A la fig. 5 qui représente une coupe suivant la ligne V-V de la fig. 4, on voit la disposition des satellites 10, 11, 12, 13 et du pignon de commande 20 dans le flasque fixe 1. On constate que les dentures 11a, 13a des satellites 11, 13 engrènent sans jeu dans la couronne dentée 1c du flasque fixe 1, et qu'il existe un certain jeu entre les dentures 10a, 12a des satellites 10, 12 et la couronne 1c.

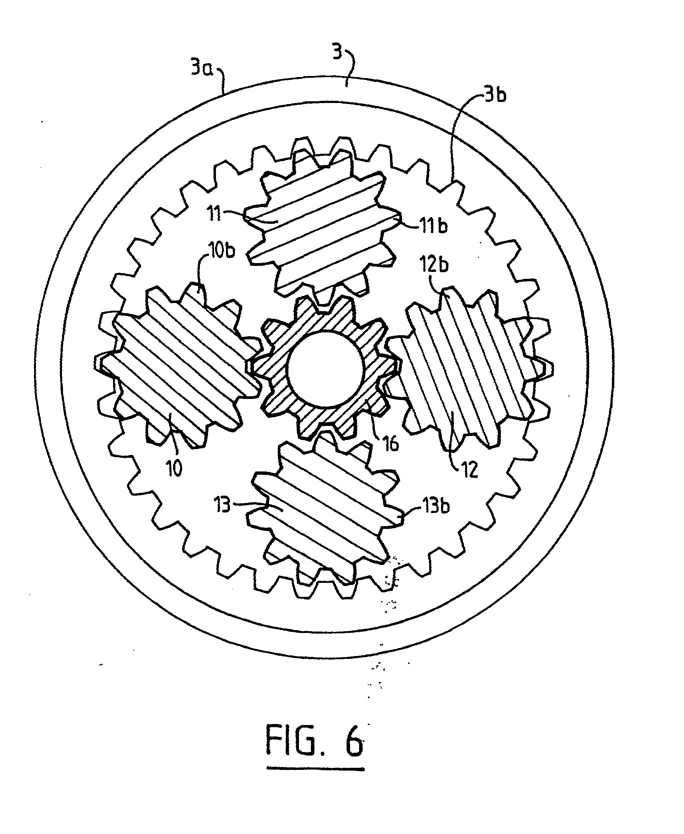

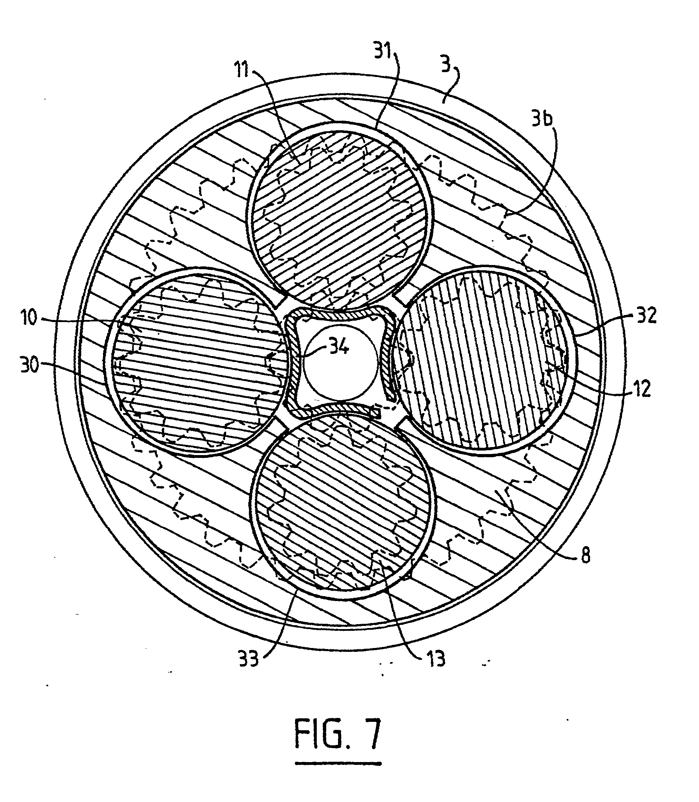

A la fig. 6 qui représente une coupe suivant la ligne VI-VI de la fig. 4, on voit la disposition des satellites 10, 11, 12, 13 et du pignon fou élastique 16 dans le flasque mobile 3. On constate que les dentures 10b, 12b des satellites 10, 12 engrènent sans jeu dans la couronne dentée 3b du flasque mobile 3, et qu'il existe un certain jeu entre les dentures 11b, 13b des satellites 11, 13 et la couronne 3b. D'autre part, on voit que le pignon fou élastique 16 engrène sans jeu avec les dentures 10b, 11b, 12b, 13b en éliminant ainsi les jeux en rotation des satellites autour de leur propre axe.

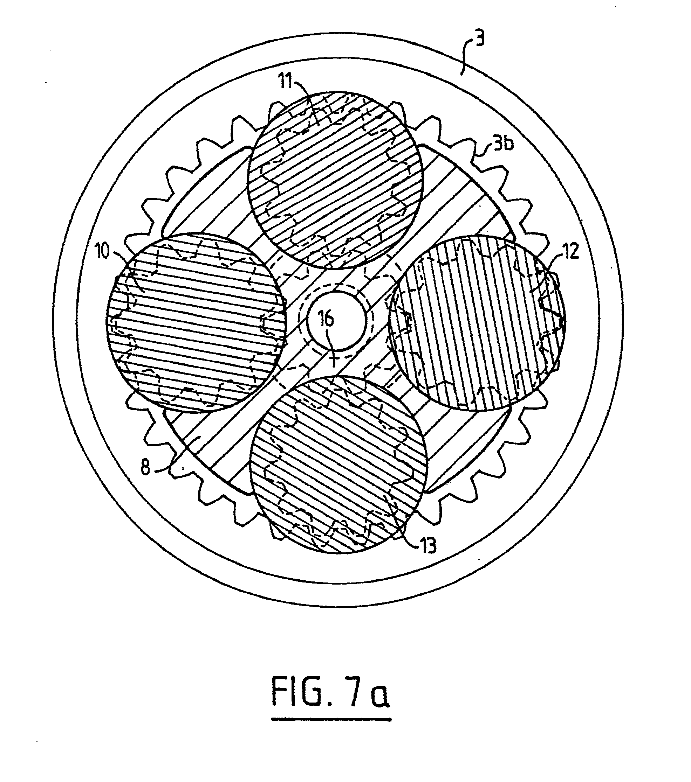

La fig. 7 qui est une coupe du mécanisme de la fig. 4 selon la ligne VII-VII représente le mécanisme réducteur comportant une première réalisation selon l'invention de la pièce centrale 8 porte-satellites.

A la fig. 7, la pièce centrale 8 porte-satellites présente quatre alvéoles 30, 31, 32, 33 destinées à recevoir les portées cylindriques des satellites 10, 11, 12, 13 et un évidement central permettant la mise en place d'un ressort 34. Le ressort 34 s'appuie sur les portées cylindriques des satellites afin de placquer les satellites dans les couronnes comme décrit précédemment. Il est à noter que la pièce centrale 8 porte-satellites présente une élasticité suffisante pour lui permettre de maintenir une pression sur les portées cylindriques des satellites afin d'interdire à leurs axes de basculer. Cette pièce centrale est guidée par son pourtour extérieur dans le flasque mobile 3 et maintenue en translation entre les deux flasques 3 et 1.

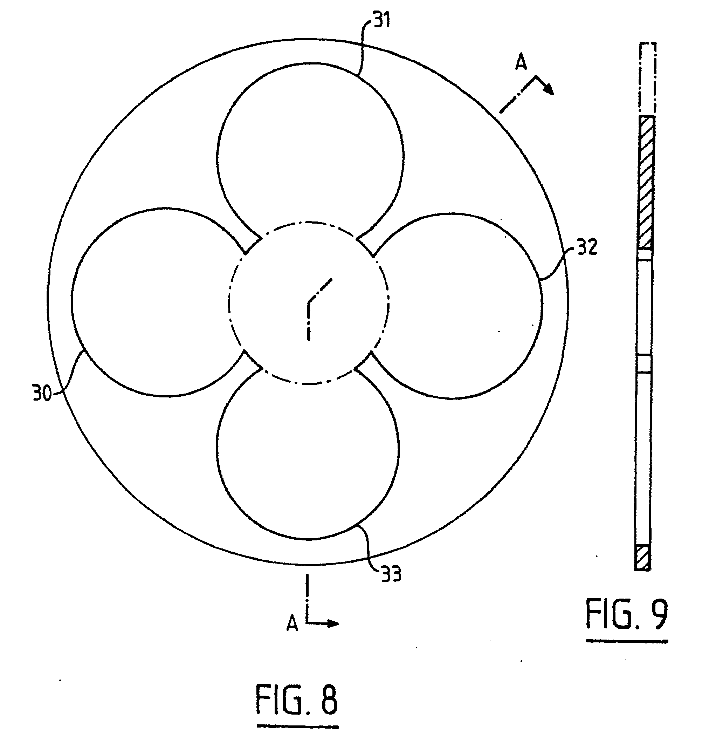

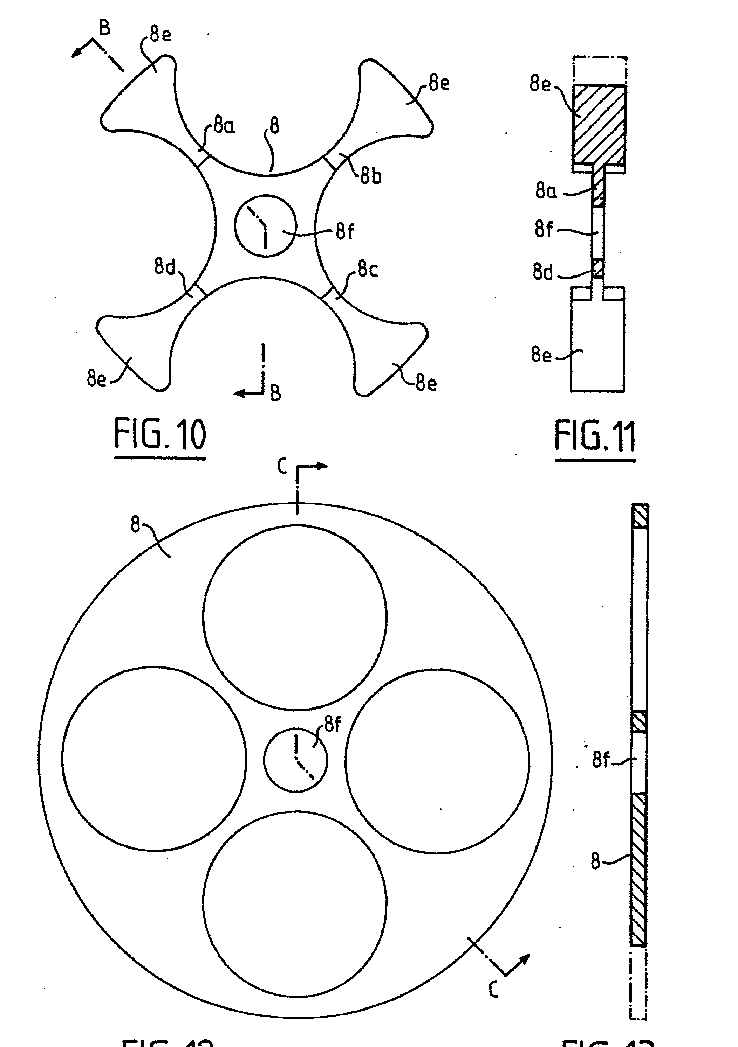

Aux fig. 8 et 9 qui montrent la pièce centrale 8 porte-satellites de la fig. 7, on remarque que les alvéoles 30, 31, 32, 33 destinées à recevoir les portées cylindriques des satellites 10, 11, 12, 13 affectent une forme oblongue afin de permettre le déplacement radial vers les couronnes des satellites tout en maintenant les axes de ces satellites dans leurs positions angulaires respectives. Les alvéoles 30, 31, 32, 33 dessinent comme un trèfle à quatre feuilles au centre de la pièce centrale 8 porte-satellites.

La fig. 7a est comme la fig. 7 une coupe du mécanisme de la fig. 4 selon la ligne VII-VII et montre le mécanisme réducteur comportant des variantes de réalisation de la pièce centrale 8 porte-satellites. A la fig. 7a, la fonction de placage des satellites dans les couronnes et le maintien élastique des axes de ces satellites sont assurés par la pièce centrale porte-satellites seule.

Deux réalisations de la pièce centrale 8 porte-satellites de la fig. 7a sont représentées aux fig. 10, 11 et respectivement 12, 13 dans lesquelles la pièce centrale 8 porte-satellite est conçue en une matière présentant une certaine élasticité lui permettant de plaquer les satellites conformément à l'invention et de maintenir les positions respectives des axes de ces satellites en appliquant une pression sur les portées cylindriques des satellites.

Aux fig. 10, 11, la pièce centrale 8 porte-satellites affecte la forme d'une croix de Saint-André dont les branches 8a, 8b, 8c, 8d sont terminées chacune par un patin 8e reposant normalement contre les parois internes des flasques 1 et 3. Une ouverture centrale 8f permet le passage de l'arbre d'entraînement 21 de la fig. 4.

Les fig. 12 et 13 représentent une autre réalisation de la pièce centrale 8 pouvant remplacer la croix de Saint André des fig. 10 et 11.

Par ailleurs, il y a lieu de noter que le mécanisme réducteur des figures précédentes peut être rendu irréversible suivant les mêmes principes qu'un système à roues et vis et ne nécessite donc, en général, pas de blocage complémentaire pour son utilisation en liaison avec un siège de véhicule.

## Revendications

1. Mécanisme réducteur sans jeu, utilisable notamment pour le réglage de diverses parties d'un siège d'un véhicule automobile, comportant un flasque fixe (1) pouvant être rendu solidaire de l'armature de l'assise du siège considéré et présentant intérieurement une couronne dentée (1c) avec laquelle engrène une première denture de satellite double (10, 11, 12, 13), puis un flasque mobile (3) pouvant être rendu solidaire de l'armature du dossier du siège et présentant une couronne dentée intérieure (3b) destinée à coopérer avec une seconde denture des satellites doubles (10, 11, 12, 13), puis ces derniers (10, 11, 12, 13) sont maintenus par leur partie cylindrique médiane dans le mécanisme réducteur par une pièce centrale (8) porte-satellites, finalement un pignon central (20) est entraîné par un arbre de commande (21) pour assurer l'entraînement des satellites doubles (10, 11, 12, 13), caractérisé en ce que d'abord le flasque mobile (3) est maintenu libre en rotation dans le flasque fixe (1) par un organe circulaire (6, 27) et que la pièce centrale (8) présente des moyens élastiques destinés à plaquer au moins deux satellites dans la denture du flasque fixe et au moins deux autres satellites dans celle du flasque mobile, ces satellites étant centrés sur le côté de la couronne dentée d'un des flasques (1, 3) à l'aide d'un pignon fou flottant élastique (16) destiné à lier sans jeu angulaire les satellites dans leur rotation autour de leur partie cylindrique médiane propre respective, le montage permettant un déplacement radial des satellites doubles par placage vers les couronnes dentées des flasques (1, 3) tout en maintenant les parties cylindriques médianes des satellites doubles (10, 11, 12, 13) dans leur position angulaire respectives.

2. Mécanisme réducteur suivant la revendication 1, caractérisé en ce que les cotes des dentures des satellites sont décalées une sur deux de la cote nominale, de sorte qu'en plaquant les satellites vers les couronnes dentées des flasques (1, 3) deux des satellites diamétralement opposés présentent une de leurs dentures plaquées sans jeu dans le flasque fixe (1) et deux autres satellites diamétralement opposés présentent l'autre denture plaquée sans jeu dans le flasque mobile (3).

3. Mécanisme réducteur selon l'une des revendications 1 ou 2, caractérisé en ce que la pièce centrale (8) porte-satellites présente un évidement central et des alvéoles destinées à recevoir les portées centrales des satellites (10, 11, 12, 13).

4. Mécanisme réducteur selon l'une des revendications 1 à 3, caractérisé en ce que les alvéoles de la pièce centrale (8) porte-satellites affectent une forme oblongue en dessinant une sorte de trèfle à quatre feuilles au centre de la pièce centrale porte-satellites.

5. Mécanisme réducteur selon l'une des revendications 1 à 4, caractérisé en ce qu'un ressort (34) est prévu dans l'évidement central pour plaquer les satellites.

6. Mécanisme réducteur selon l'une des revendications 1 à 5, caractérisé en ce que la pièce centrale (8) porte-satellites est réalisée en une matière présentant des propriétés élastiques.

7. Mécanisme réducteur selon l'une des revendications 1 à 6, caractérisé en ce que la pièce centrale (8) porte-satellites affecte en plan la forme d'une croix de Saint-André dont les ouvertures sont destinées à recevoir les portées cylindriques des satellites doubles (10, 11, 12, 13) et dont les extrémités des branches (8a, 8b, 8c, 8d) portent chacune un patin courbe (8c).

**Claims**

1. Backlash-free reducing mechanism, particularly usable for setting various parts of a seat of an automobile vehicle, including a fixed flange (1) rigidly connectable to the sitting portion frame of the seat in consideration and being insidely provided with a toothed ring (1c) with which meshes a first toothing of double planet wheels (10, 11, 12, 13), then a mobile flange (3) rigidly connectable with the backing portion frame of the seat and having an inner toolthed ring (3b) intended for cooperating with a second toothing of the double planet wheels (10, 11, 12, 13), then the latter (10, 11, 12, 13) are maintained by their median cylindrical portion in the reducing mechanism by a central planet wheel holding piece (8), finally a central pinion (20) is driven by a control shaft (21) for driving the double planet wheels (10, 11, 12, 13), characterized in that first the mobile flange (3) is maintained free in rotation in the fixed flange (1) by a circular member (6, 27) and in that the central piece (8) is provided with resilient means designed to tightly press at least two planet wheels in the toothing of the fixed flange and at least two other planet wheels in that of the mobile flange, these planet wheels being centered on the side of the toothed ring of one of the flanges (1, 3) by means of a resilient floating idle pinion (16) designed for connecting without angular backlash the planet wheels in their rotation about their respective own median cylindrical portion, the mounting enabling a radial displacement of the double planet wheels by application towards the toothed rings of the flanges (1, 3), while main-aining the median cylindrical portions of the double planet wheels (10, 11, 12, 13) in their respective angular position.

2. Reducing mechanism according to claim 1, characterized in that every second dimension of the toothings of the planet wheels is offset with respect to the nominal dimension, so that by tightly pressing the planet wheels in the toothed rings of the flanges (1, 3), two of the diametrically opposite planet wheels have one of their toothings applied without any backlash in the fixed flange (1) and two other diametrically opposite planet wheels have the other toothing applied without any backlash in the mobile flange (3).

3. Reducing mechanism according to one of claims 1 or 2, characterized in that the central planet wheel holding piece (8) is formed with a central recess and with cells intended for receiving the central support elements of the planet wheels (10, 11, 12, 13).

4. Reducing mechanism according to one of claims 1 to 3, characterized in that the cells of the central planet wheel holding piece (8) have an oblong shape by delineating a kind of four-leaved clover in the center of the central planet wheel holding piece.

5. Reducing mechanism according to one of claims 1 to 4, characterized in that a spring (34) is provided in the central recess in order to tightly press the planet wheels.

6. Reducing mechanism according to one of claims 1 to 5, characterized in that the central planet wheel holding piece (8) is made of a material having resilient properties.

7. Reducing mechanism according to one of claims 1 to 6, characterized in that the central planet wheel holding piece (8) has, in plane, the shape of a St Andrew's cross, the openings of which are intended for receiving the cylindrical support elements of the double planet wheels (10, 11, 12, 13), and ends of the branches (8a, 8b, 8c, 8d) of which each carry a curved pad (8e).

**Patentansprüche**

Spielfreies Untersetzungsgetriebe, insbesondere zum Verstellen verschiedener Teile eines Kraftfahrzeugsitzes, mit einem festen Flansch (1), der mit dem Rahmen der Sitzfläche des betrachteten Sitzes fest verbindbar ist und im Innern einen Zahnkranz (1c) aufweist, mit dem eine erste Verzahnung eines doppelten Satellitenrades (10, 11, 12, 13) kämmt, einem beweglichen Flansch (3), der mit dem Rahmen der Sitzlehne fest verbindbar ist und einen Innenzahnkranz (3b) aufweist, der zum Zusammenwirken mit einer zweiten Verzahnung der doppelten Satellitenräder (10, 11, 12, 13) bestimmt ist, wobei letztere (10, 11, 12, 13) an ihrem zylindrischen Mittelteil im Untersetzungsgetriebe mittels eines zentralen Satellitenträgers (8) gehalten sind, schließlich mit einem Zentralritzel (20), das zum Antreiben der doppelten Satellitenräder (10, 11, 12, 13) von einer Antriebswelle (21) angetrieben wird, dadurch gekennzeichnet, daß zuerst der bewegliche Flansch (3) im festen Flansch (1) durch ein kreisrundes Bauteil (6, 27) frei drehbar gehalten ist, und daß der zentrale Satellitenträger (8) elastische Mittel aufweist, die dazu bestimmt sind, wenigstens zwei Satellitenräder in die Verzahnung des festen Flansches und wenigstens zwei andere Satellitenräder in die Verzahnung des beweglichen Flansches zu pressen, wobei diese Satellitenräder auf der Seite des Zahnkranzes eines der Flansche (1, 3) mittels eines elastischen, schwimmend angeordneten Losritzels (16) zentriert sind, welches dazu bestimmt ist, die Satellitenräder bei ihrer Drehung um ihr eigenes zylindrisches Mittelstück ohne Winkelspiel miteinander zu verbinden, wobei die Montage eine radiale Versetzung der doppelten Satellitenräder durch Anpressen an die Zahnkränze der Flansche (1, 3) ermöglicht und dabei die zylindrischen Mittelstücke der doppelten Satellitenräder (10, 11, 12, 13) in ihrer jeweiligen Winkelstellung festgehalten sind.

2. Untersetzungsgetriebe nach Anspruch 1, dadurch gekennzeichnet, daß jedes zweite Maß der Verzahnungen der Satellitenräder gegenüber dem Nennmaß so verschoben ist, daß durch Pressen der Satellitenräder gegen die Zahnkränze der Flansche (1, 3) zwei diametral angeordnete der Satellitenräder mit einer ihrer Verzahnungen spielfrei in den festen Flansch (1) und zwei diametral angeordnete andere Satellitenräder mit ihrer anderen Verzahnung spielfrei in den beweglichen Flansch (3) gepreßt sind.

3. Untersetzungsgetriebe nach einem der Ansprüche 1 oder 2, dadurch gekennzeichnet, daß der zentrale Satellitenträger (8) eine zentrale Aussparung und Taschen zur Aufnahme der Mittelsitze der Satellitenräder (10, 11, 12, 13) aufweist.

4. Untersetzungsgetriebe nach einem der Ansprüche 1 bis 3, dadurch gekennzeichnet, daß die Taschen des zentralen Satellitenträgers (8) unter Beschreibung einer Art vierblättrigen Kleeblatts in der Mitte des zentralen Satellitenträgers langgestreckt sind.

5. Untersetzungsgetriebe nach einem der Ansprüche 1 bis 4, dadurch gekennzeichnet, daß eine Feder (34) zum Anpressen der Satellitenräder in der zentralen Ausnehmung vorgesehen ist.

6. Untersetzungsgetriebe nach einem der Ansprüche 1 bis 5, dadurch gekennzeichnet, daß der zentrale Satellitenträger (8) aus einem elastische Eigenschaften besitzenden Werkstoff hergestellt ist.

7. Untersetzungsgetriebe nach einem der Ansprüche 1 bis 6, dadurch gekennzeichnet, daß der zentrale Satellitenträger (8) in Draufsicht die Gestalt eines Andreaskreuzes hat, dessen Öffnungen zur Aufnahme der zylindrischen Sitze der doppelten Satellitenräder (10, 11, 12, 13) bestimmt sind und bei dem die Endstücke der Schenkel (8a, 8b, 8c, 8d) je ein gekrümmtes Gleitstück (8c) aufweisen.

FIG. 2

FIG.1

FIG. 3

EP 0 319 393 B1

FIG. 5

FIG. 4

EP 0 319 393 B1

FIG. 6

FIG. 7

FIG. 7a

FIG. 8

FIG. 9

FIG. 10

FIG. 11

FIG. 12

FIG. 13